# EUROPÄISCHE PATENTSCHRIFT

(11) **EP 4 049 866 B1**
(45) Veröffentlichungstag und Bekanntmachung des Hinweises auf die Patenterteilung: **18.03.2026**
(21) Anmeldenummer: 21208219.2
(22) Anmeldetag: 15.11.2021
(51) Int. Cl.: B60C 23/04

(54) **VERFAHREN ZUR VERARBEITUNG VON MESSWERTEN**
METHOD FOR PROCESSING MEASURED VALUES
PROCÉDÉ DE TRAITEMENT DE VALEURS MESURÉES

(30) Priorität: 25.02.2021 DE 102021201787
(43) Veröffentlichungstag der Anmeldung: 31.08.2022
(73) Patentinhaber: Continental Reifen Deutschland GmbH, 30175 Hannover (DE)
(72) Erfinder: Sahlmüller, Baldo, 30165 Hannover (DE); Gläser, Frank, 30165 Hannover (DE)
(74) Vertreter: Continental Corporation

(56) Entgegenhaltungen:
- EP-A1- 3 088 219
- GB-A- 2 429 819
- US-A1- 2013 304 416
- US-A1- 2016 167 446
- US-A1- 2020 056 983
- US-B2- 9 891 045

## Beschreibung

Die Erfindung betrifft ein Verfahren zur Verarbeitung von Messwerten.

Die Erfindung geht aus von einem Verfahren zur Verarbeitung von Messwerten, wobei das Verfahren die folgenden Schritte aufweist:
- Bereitstellen eines Sensors, wobei der Sensor zum Messen einer physikalischen Messgröße eines Reifens vorgesehen ist;
- Bereitstellen eines Reifens;
- Anordnen des Sensors in dem Reifen;
- Erfassen von Messwerten der physikalischen Messgröße mittels des Sensors;
- Bestimmen eines Messzeitpunktes, zu dem die physikalische Messgröße gemessen worden ist, wobei der Messzeitpunkt einem Messwert eindeutig zugeordnet werden kann;
- Bereitstellen einer Übertragungseinheit, wobei die Übertragungseinheit zur Übertragung von Messwerten und Messzeitpunkten vorgesehen ist;
- Übertragung der Messwerte und von Informationen über die Messzeitpunkte mittels der Übertragungseinheit an eine Speichereinheit.

Bei dem Sensor handelt es sich beispielsweise um einen Temperatursensor, um einen Drucksensor, um einen Beschleunigungssensor, wobei der Beschleunigungssensor insbesondere zur Messung einer Radialbeschleunigung eines Reifens oder der Messung einer Tangentialbeschleunigung eines Reifens oder der Messung einer Lateralbeschleunigung eines Reifens geeignet ist, oder um einen Verformungssensor.

Bei dem Reifen handelt es sich beispielsweise um einen LKW-Reifen, um einen PKW-Reifen oder um einen Zweirad-Reifen:
Aus dem Stand sind Verfahren zur Verarbeitung von Messwerten, die im Zusammenhang mit einem Betrieb von Reifen auftreten, bekannt. Beispielsweise werden solche Verfahren in der US2016167446 A1, der US2020056983A1, der GB2429819A**,** der US20130304416 A1 oder der EP3088219A offenbart.

Bei der Speichereinheit handelt es sich beispielsweise um eine Datenbank.

Bei den aus dem Stand der Technik bekannten Verfahren zur Verarbeitung von Messwerten könnte es zu einer Auswertung eines solchen Messwertes kommen, wobei dieser Messwert nicht aussagekräftig oder typisch für die Messung ist. Der Messwert könnte beispielsweise deshalb nicht aussagekräftig oder typisch die Messung sein, weil beispielsweise eine Fehlfunktion des Sensors vorgelegen hat oder eine unbekannte technische Beeinflussung auf den Messvorgang stattgefunden hat. Die weitere Verarbeitung dieser Messwerte könnte dann fehlerhaft sein und somit zu einem untauglichen Verfahren führen.

Der Erfindung liegt daher die Aufgabe zugrunde, ein Verfahren zur Verarbeitung von Messwerten bereitzustellen, das zuverlässiger angewendet werden kann und bei dem die Möglichkeit einer Auswertung von fehlerhaften Messwerten verringert wird. des Anspruchs 1.

Durch den erfindungsgemäßen Umstand werden Messwerte stets unter der Berücksichtigung von zeitlich zuvor erfassten Messwerten verarbeitet. Eine atypische Abweichung eines Messwertes von einem zu erwartenden Verlauf wird somit anhand der Berücksichtigung der zuvor erfassten Messwerte leichter erkannt. Anhand der Berücksichtigung der zeitlich zuvor erfassten Messwerte kann beispielsweise schneller und zuverlässiger auf eine Fehlfunktion des

Sensors oder auf eine zunächst nicht berücksichtigte physische Beeinflussung des Messvorgangs geschlossen werden.

Somit wird ein verbessertes Verfahren zur Verarbeitung von Messwerten bereitgestellt, bei dem die Möglichkeit einer fehlerhaften Verarbeitung von Messwerten verringert wird.

Weitere vorteilhafte Ausgestaltungsformen der vorliegenden Erfindung sind Gegenstand der Unteransprüche.

Durch das Verfahren können mögliche Schwankungen der Messgröße aufgrund von physikalischen Beschränkungen der Messungen oder Messungenauigkeiten ausgeglichen oder minimiert werden.

Gemäß einer nächsten vorzugsweisen Ausgestaltungsform der vorliegenden Erfindung wird ein Mittelwert sämtlicher innerhalb des gleitenden Messintervalls erfassten Messwerte gebildet.

Durch den erfindungsgemäßen Umstand, wonach ein Mittelwert sämtlicher innerhalb des gleitenden Messintervalls erfasster Messwerte gebildet wird, können Schwankungen ausgeglichen und ein Wert erzielt werden, der dem Erwartungswert ausreichend nahekommt.

Gemäß einer nächsten vorzugsweisen Ausgestaltungsform der vorliegenden Erfindung wird ein Median sämtlicher innerhalb des gleitenden Messintervalls erfasster Messwerte gebildet.

Durch den erfindungsgemäßen Umstand, wonach ein Median sämtlicher innerhalb des gleitenden Messintervalls erfasster Messwerte gebildet wird, können Schwankungen ausgeglichen und ein Wert erzielt werden, der dem Erwartungswert ausreichend nahekommt. Die Methode ist zudem gegenüber einzelnen Ausreißern in den Messungen ausreichend stabil.

Gemäß der vorliegenden Erfindung werden die Messwerte mittels eines Butterworth-Filters geglättet.

Durch den erfindungsgemäßen Umstand, wonach die Messwerte mittels eines Butterworth-Filters geglättet werden, können Schwankungen ab einer Grenzfrequenz dieser Schwankungen recht zuverlässig unterdrückt werden und Schwankungen unterhalb dieser Grenzfrequenz werden nur wenig verändert, so dass ausreichend genau zwischen unerwünschten Schwankungen aufgrund der Messungenauigkeit und Schwankungen aufgrund des Verhaltens des Reifens, die bestimmt werden sollen, unterschieden werden kann.

Gemäß einer nächsten vorzugsweisen Ausgestaltungsform der vorliegenden Erfindung handelt es sich bei den Messwerten innerhalb des gleitenden Messintervalls um jeweils repräsentative Messwerte, wobei das gleitende Messintervall in eine Mehrzahl an Unterintervallen gegliedert wird und für jedes Unterintervall ein repräsentativer Messwert erzeugt wird.

Gemäß einer nächsten vorzugsweisen Ausgestaltungsform der vorliegenden Erfindung handelt es sich bei dem repräsentativen Messwert um den Mittelwert der während eines Unterintervalls erfassten Messwerte oder es handelt sich bei dem repräsentativen Messwert um den Medianwert der während eines Unterintervalls erfassten Messwerte oder es handelt sich bei dem repräsentativen Messwert um den Minimalwert der während eines Unterintervalls erfassten Messwerte oder es handelt sich bei dem repräsentativen Messwert um den Maximalwert der während eines Unterintervalls erfassten Messwerte.

Bei dem Druck handelt es sich insbesondere um einen in einem Reifeninnenraum herrschenden Druck. Bei der Temperatur handelt es sich insbesondere um eine in einem Reifeninnenraum herrschende Temperatur.

Gemäß einer nächsten vorzugsweisen Ausgestaltungsform der vorliegenden Erfindung beträgt die Länge des gleitenden Messintervalls insbesondere einen Tag oder für den Fall, wonach es sich bei der physikalischen Messgröße um eine Temperatur handelt, um ein gleitendes Messintervall von 2 Minuten bis 15 Minuten.

Gemäß einer nächsten vorzugsweisen Ausgestaltungsform der vorliegenden Erfindung wird eine Zeitreinanalyse der erfassten Messwerte vorgenommen. Gemäß einer weiteren vorzugsweisen Ausgestaltungsform der vorliegenden

Erfindung wird ein möglicher Druckverlust und insbesondere ein Grad eines möglichen Druckverlustes in Abhängigkeit der Zeitreihenanalyse bestimmt.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines Sensors und eines Reifens zur Durchführung des erfindungsgemäßen Verfahrens;
Fig. 2: Eine schematische Darstellung eines zeitlichen Verlaufs von Messwerten einer Messgröße.

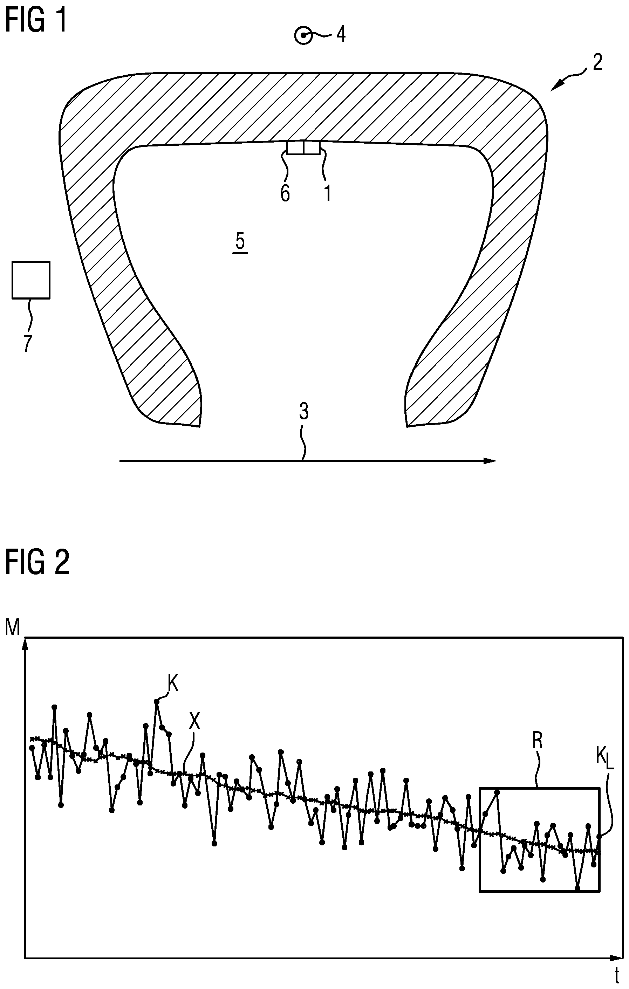

In der Figur 1 sind ein Sensor 1 und ein Reifen 2 schematisch dargestellt. Der Reifen 2 ist in Radialschnittansicht dargestellt und um eine Rotationsachse 3 in eine Umlaufrichtung 4 rotierbar. Der Reifen 2 weist einen Reifeninnenraum 5 auf.

Gemäß der in der Figur 1 dargestellten Ausführungsform ist der Sensor 1 in dem Reifeninnenraum 5 des Reifens 2 angeordnet.

Insbesondere ist an dem Reifen 2 eine Übertragungseinheit 6 angeordnet, wobei die Übertragungseinheit 6 zur Übertragung von Messwerten und Messzeitpunkten an eine Speichereinheit 7 vorgesehen ist.

In der Figur 2 ist ein zeitlicher Verlauf von Messwerten einer Messgröße M schematisch dargestellt. Aufgetragen sind die Messwerte M der Messgröße auf der Ordinate gegenüber der Zeit t auf der Abszisse. Bei der Messgröße M kann es sich als physikalische Messgröße um eine Temperatur, die in dem Reifeninnenraum 5 des Reifens 2 herrscht, handeln, um einen Druck, der in dem Reifeninnenraum 5 des Reifens 2 herrscht, handeln, um eine Radialbeschleunigung des Reifens 2 handeln, um eine Tangentialbeschleunigung des Reifens 2, oder um eine Lateralbeschleunigung des Reifens 2 handeln.

Mit den Kreis-Symbolen K sind die einzelnen Messwerte der physikalischen Messgröße zu den jeweiligen Messzeitpunkten eingetragen.

Mit den X-Symbolen sind jeweils Mittelwerte aller gleitenden Messintervalle bis zu dem aktuellen Zeitpunkt eingetragen.

Das Rechteck R zeigt ein gleitendes Messintervall für den Messpunkt K_{L.}

### Bezugszeichenliste

- 1: Sensor
- 2: Reifen
- 3: Rotationsachse
- 4: Umlaufrichtung
- 5: Reifeninnenraum
- 6: Übertragungseinheit
- 7: Speichereinheit

## Patentansprüche

1. Verfahren zur Verarbeitung von Messwerten, aufweisend die folgenden Schritte:
- Bereitstellen eines Sensors (1), wobei der Sensor (1) zum Messen einer physikalischen Messgröße eines Reifens (2) vorgesehen ist;
- Bereitstellen eines Reifens (2);
- Anordnen des Sensors (1) in dem Reifen (2);
- Erfassen von Messwerten der physikalischen Messgröße mittels des Sensors (1), wobei es sich bei der physikalischen Messgröße um eine Temperatur oder um einen Druck des Reifens (2) handelt;
- Bestimmen eines Messzeitpunktes, zu dem die physikalische Messgröße gemessen worden ist, wobei der Messzeitpunkt einem Messwert eindeutig zugeordnet werden kann;
- Bereitstellen einer Übertragungseinheit (6), wobei die Übertragungseinheit (6) zur Übertragung von Messwerten und Messzeitpunkten vorgesehen ist;
- Übertragen der Messwerte und von Informationen über die Messzeitpunkte mittels der Übertragungseinheit (6) an eine Speichereinheit (7);
- Verarbeiten eines Messwerts stets unter Berücksichtigung von zeitlich zuvor erfassten Messwerten, **gekennzeichnet durch den weiteren Schritt:**
- Festlegen eines gleitenden Messintervalls konstanter zeitlicher Ausdehnung, wobei ein letzter innerhalb des gleitenden Messintervalls erfasster Messwert für den Fall, dass noch mindestens ein weiterer Messwert innerhalb des gleitenden Messintervalls erfasst wird, stets unter Berücksichtigung sämtlicher anderer innerhalb des gleitenden Messintervalls erfasster Messwerte verarbeitet wird,
- **und,** dass die Messwerte mittels eines Butterworth-Filters geglättet werden.

2. Verfahren nach Anspruch 1, **dadurch gekennzeichnet, dass** ein Mittelwert sämtlicher innerhalb des gleitenden Messintervalls erfassten Messwerte gebildet wird.

3. Verfahren nach Anspruch 1, **dadurch gekennzeichnet, dass** ein Median sämtlicher innerhalb des gleitenden Messintervalls erfassten Messwerte gebildet wird.

4. Verfahren nach einem der Ansprüche 1 bis 3, **dadurch gekennzeichnet, dass** es sich bei den Messwerten innerhalb des gleitenden Messintervalls um jeweils repräsentative Messwerte handelt, wobei das gleitende Messintervall in eine Mehrzahl an Unterintervallen gegliedert wird und für jedes Unterintervall ein repräsentativer Messwert erzeugt wird.

5. Verfahren nach dem vorhergehenden Anspruch, **dadurch gekennzeichnet, dass** es sich bei dem repräsentativen Messwert um den Mittelwert der während eines Unterintervalls erfassten Messwerte handelt oder es sich bei dem repräsentativen Messwert um den Medianwert der während eines Unterintervalls erfassten Messwerte handelt oder es sich bei dem repräsentativen Messwert um den Minimalwert der während eines Unterintervalls erfassten Messwerte handelt oder es sich bei dem repräsentativen Messwert um den Maximalwert der während eines Unterintervalls erfassten Messwerte handelt.

6. Verfahren nach einem der vorhergehenden Ansprüche, **dadurch gekennzeichnet, dass** die Länge des gleitenden Messintervalls insbesondere 1 Tag beträgt oder für Fall, wonach es sich bei der physikalischen Messgröße um eine Temperatur handelt, die Länge des gleitenden Messintervalls 2 Minuten bis 15 Minuten beträgt.

7. Verfahren nach einem der vorhergehenden Ansprüche, **dadurch gekennzeichnet, dass** eine Zeitreihenanalyse der erfassten Messwerte vorgenommen wird.

8. Verfahren nach dem vorhergehenden Anspruch **dadurch gekennzeichnet, dass** für den Fall, dass es sich bei der physikalischen Messgröße um einen Druck in einem Innenraum (5) des Reifens (2) handelt, ein möglicher Druckverlust und insbesondere ein Grad eines möglichen Druckverlustes in Abhängigkeit der Zeitreihenanalyse bestimmt wird.

## Claims

1. Method for processing measured values, having the following steps:
- providing a sensor (1), wherein the sensor (1) is provided for measuring a physical measurement variable of a tyre (2);
- providing a tyre (2);
- arranging the sensor (1) in the tyre (2);
- capturing measured values of the physical measurement variable by means of the sensor (1), wherein the physical measurement variable is a temperature or a pressure of the tyre (2);
- determining a measurement time at which the physical measurement variable has been measured, wherein the measurement time can be uniquely assigned to a measured value;
- providing a transmission unit (6), wherein the transmission unit (6) is provided for transmitting measured values and measurement times;
- transmitting the measured values and information relating to the measurement times to a memory unit (7) by means of the transmission unit (6);
- always processing a measured value taking into account temporally previously captured measured values, **characterized by** the further step of:
- specifying a floating measurement interval of constant temporal length, wherein a most recent measured value captured within the floating measurement interval is, if at least one further measured value is also captured within the floating measurement interval, always processed taking into consideration all other measured values captured within the floating measurement interval,
- and in that the measured values are smoothed using a Butterworth filter.

2. Method according to Claim 1, **characterized in that** an average value of all measured values captured within the floating measurement interval is formed.

3. Method according to Claim 1, **characterized in that** a median of all measured values captured within the floating measurement interval is formed.

4. Method according to one of Claims 1 to 3, **characterized in that** the measured values within the floating measurement interval are each representative measured values, wherein the floating measurement interval is divided into a plurality of sub-intervals and a representative measured value is generated for each sub-interval.

5. Method according to the preceding claim, **characterized in that** the representative measured value is the average value of the measured values captured during a sub-interval, or the representative measured value is the median value of the measured values captured during a sub-interval, or the representative measured value is the minimum value of the measured values captured during a sub-interval, or the representative measured value is the maximum value of the measured values captured during a sub-interval.

6. Method according to one of the preceding claims, **characterized in that** the length of the floating measurement interval is in particular 1 day or, if the physical measurement variable is a temperature, the length of the floating measurement interval is 2 minutes to 15 minutes.

7. Method according to one of the preceding claims, **characterized in that** a time series analysis of the captured measured values is carried out.

8. Method according to the preceding claim, **characterized in that**, if the physical measurement variable is a pressure in an interior (5) of the tyre (2), a possible pressure loss and in particular a degree of a possible pressure loss are determined on the basis of the time series analysis.

## Revendications

1. Procédé de traitement des valeurs de mesure, comportant les étapes suivantes :
- fourniture d'un capteur (1), le capteur (1) étant prévu pour mesurer une grandeur de mesure physique d'un pneu (2) ;
- fourniture d'un pneu (2) ;
- disposition du capteur (1) dans le pneu (2) ;
- détection de valeurs de mesure de la grandeur de mesure physique au moyen du capteur (1), la grandeur de mesure physique étant une température ou une pression du pneu (2) ;
- détermination d'un moment de mesure auquel la grandeur de mesure physique a été mesurée, le moment de mesure pouvant être clairement associé à une valeur de mesure ;
- fourniture d'une unité de transmission (6), l'unité de transmission (6) étant prévue pour transmettre des valeurs de mesure et des moments de mesure ;
- transmission des valeurs de mesure et d'informations sur les moments de mesure au moyen de l'unité de transmission (6) à une unité de mémoire (7) ;
- traitement d'une valeur de mesure en tenant toujours compte de valeurs de mesure détectées au préalable dans le temps, **caractérisé par** l'étape supplémentaire de :
- fixation d'un intervalle de mesure glissant d'étendue temporelle constante, une dernière valeur de mesure détectée dans l'intervalle de mesure glissant étant toujours traitée en tenant compte de toutes les autres valeurs de mesure détectées dans l'intervalle de mesure glissant, dans le cas où au moins une valeur de mesure supplémentaire est encore détectée dans l'intervalle de mesure glissant,
- et les valeurs de mesure étant lissées au moyen d'un filtre Butterworth.

2. Procédé selon la revendication 1, **caractérisé en ce qu'**une valeur moyenne de toutes les valeurs de mesure détectées à l'intérieur de l'intervalle de mesure glissant est obtenue.

3. Procédé selon la revendication 1, **caractérisé en ce qu'**une médiane de toutes les valeurs de mesure détectées dans l'intervalle de mesure glissant est obtenue.

4. Procédé selon l'une des revendications 1 à 3, **caractérisé en ce que** les valeurs de mesure à l'intérieur de l'intervalle de mesure glissant sont des valeurs de mesure respectivement représentatives, l'intervalle de mesure glissant étant divisé en plusieurs sous-intervalles et une valeur de mesure représentative étant générée pour chaque sous-intervalle.

5. Procédé selon la revendication précédente, **caractérisé en ce que** la valeur de mesure représentative est la valeur moyenne des valeurs de mesure détectées au cours d'un sous-intervalle ou la valeur de mesure représentative est la valeur médiane des valeurs de mesure détectées au cours d'un sous-intervalle ou la valeur de mesure représentative est la valeur minimale des valeurs de mesure détectées au cours d'un sous-intervalle ou la valeur de mesure représentative est la valeur maximale des valeurs de mesure détectées au cours d'un sous-intervalle.

6. Procédé selon l'une des revendications précédentes, **caractérisé en ce que** la longueur de l'intervalle de mesure glissant est en particulier de 1 jour ou, dans le cas où la grandeur de mesure physique est une température, la longueur de l'intervalle de mesure glissant va de 2 minutes à 15 minutes.

7. Procédé selon l'une des revendications précédentes, **caractérisé en ce qu'**une analyse de série chronologique des valeurs de mesure détectées est effectuée.

8. Procédé selon la revendication précédente, **caractérisé en ce que**, dans le cas où la grandeur de mesure physique est une pression dans un espace intérieur (5) du pneu (2), une perte de pression éventuelle et en particulier un degré d'une perte de pression éventuelle sont déterminés en fonction de l'analyse de série chronologique.
